(19) Europäisches Patentamt
European Patent Office
Office européen des brevets

(11) **EP 2 950 507 A1**

(12) **EUROPEAN PATENT APPLICATION**

(43) Date of publication:
**02.12.2015 Bulletin 2015/49**

(51) Int Cl.:
*H04L 29/08* (2006.01)  *G06F 17/30* (2006.01)

(21) Application number: **14170421.3**

(22) Date of filing: **28.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **FUJITSU LIMITED**
**Kawasaki-shi,**
**Kanagawa 211-8588 (JP)**

(72) Inventors:
• **Hu, Bo**
**Winchester, SO22 5EG (GB)**

• **Carvalho, Nuno**
**London, W5 4BF (GB)**

(74) Representative: **Hutchison, James**
**Haseltine Lake LLP**
**300 High Holborn**
**London, Greater London WC1V 7JH (GB)**

Remarks:
Amended claims in accordance with Rule 137(2)
EPC.

(54) **Method and system for storing distributed graph data**

(57) Embodiments include a distributed data graph storage system, configured to store a data graph representing information as vertices interconnected by edges denoting relationships between the connected vertices, the data graph being composed of a plurality of graph partitions. The data graph storage system comprises: a plurality of data storage servers each configured to store one or more data portions, wherein each data portion encodes a version of one from among the plurality of graph partitions; a data portion distribution controller configured, when two or more data portions each encode a version of the same graph partition from among the plurality of graph partitions, to allocate the two or more data portions to different data storage servers from among the plurality of data storage servers; a data access module configured to receive access requests for the stored data graph and to distribute the received access requests among the plurality of data storage servers; a graph partition usage monitor configured to record statistics representing the distribution among the data portions of data access events caused by the access requests; wherein the data portion distribution controller is configured to increase or decrease the number of data portions encoding versions of a particular one from among the graph partitions in dependence upon the recorded statistics.

FIGURE 1

EP 2 950 507 A1

## Description

The present invention lies in the field of distributed storage of graph data. In particular, the present invention relates to control mechanisms for controlling the replication of sub-graphs from within the data graph.

The graph data model encounters difficulties when stored in a distributed data storage system due to two characteristics. Firstly, the two main graph data operations to be performed in response to access requests are traversal/path finding and sub-graph matching. In order to efficiently support the former operation, all the vertices (or as many vertices as possible) on a traverse path should be stored on the same physical data storage server, so as to avoid transporting data over the communication network, which in many cases is a performance bottleneck. However, this depends on the traverse queries and applications and traverse paths cannot be predicted in a static manner. Some domain heuristics can help to partition the graph based on numeric criteria, but the actual performance is still query specific and is hard to predict. System performance can deteriorate when query patterns change.

Min-cut based partition algorithms can minimise the number of shared graph edges across data storage server boundaries. However, this minimises the number of shared edges rather than the traffic of traversals that traverse the shared edges, and thus cannot guarantee that communication between two data servers is minimised. It can well be the case that over time an edge can appear on a disproportionately high number of traverse queries. A cut at this edge will inevitably cause the deterioration of the overall performance.

Meanwhile, a certain part of the graph can be denser than other parts in the sense that graph vertices in some parts can have much higher degrees than those from other parts. Also, it is highly possible that particular paths of a graph hold information which is important to particular user applications and thus become query-popular compared with other paths. These popular graph paths can become the bottleneck of system performance.

It is desirable to find a mechanism that can adjust the physical storage of a data graph in order to respond to usage patterns, so as to reduce the needs of transporting graph vertices across the communication network.

Embodiments of the present invention include: a distributed data graph storage system, configured to store a data graph representing information as vertices interconnected by edges denoting relationships between the connected vertices, the data graph being composed of a plurality of graph partitions. The data graph storage system comprises: a plurality of data storage servers each configured to store one or more data portions, wherein each data portion encodes a version of one from among the plurality of graph partitions; a data portion distribution controller configured, when two or more data portions each encode a version of the same graph partition from among the plurality of graph partitions, to allocate the two or more data portions to different data storage servers from among the plurality of data storage servers; a data access module configured to receive access requests for the stored data graph and to distribute the received access requests among the plurality of data storage servers; a graph partition usage monitor configured to record statistics representing the distribution among the data portions of data access events caused by the access requests; wherein the data portion distribution controller is configured to increase or decrease the number of data portions encoding versions of a particular one from among the graph partitions in dependence upon the recorded statistics.

Advantageously, embodiments of the present invention provide a means to control duplication of subsets of the data graph in order to avoid bottlenecks associated with concurrent accesses being made to a particular subset of the data graph. The recording and use of statistics representing the distribution of data access requests provides a mechanism for identifying subsets of the stored data which are queried disproportionately often and increasing the replication of the areas of the graph encoded by those stored data. Such replication may be at the expense of storage space previously used for storing subsets of the stored data which are queried disproportionately little.

A distributed storage system includes at least two separate data storage servers. A data storage server may also be referred to as a storage node, a data storage node, a storage unit, a data storage unit, or simply as a node or a server. A data storage server includes not only storage hardware on which to record data in a form in which they can be accessed, queried, and read or modified, but also a management module or controller configured to control access to the data stored thereon. For example, the management module may be configured to handle queries submitted to the data storage server. Handling a query may include receiving the query from another entity such as a data access module, searching the data stored on the data storage server to find data items satisfying the query, and outputting the data items satisfying the query (possibly in a modified form or partial form) as query results. Each data storage server may have its own processor configured to handle a particular number of concurrent accesses (an access being, for example, a query or range query) to the data stored thereon. The particular number may be uniform across all of the data storage servers in the storage system or may be a property of the individual data storage servers which may vary between data storage servers.

The data graph is a manifestation of stored data, and is a means for representing the stored data, both to a user or other external application and to processes within the storage system. The data graph is encoded in some way in storage. For example, it may be that the data graph is encoded as triples, for example, RDF triples. Alternatively or additionally, it may be that data is stored in a key value store, with triples serving as keys indexing storage locations at which additional data (for example, metadata) defining a resource or vertex is stored.

A graph partition is a subset of the data graph and may be a subset of adjacent vertices within the graph, so that a graph partition is a continuous region of the graph. Algorithms exist for partitioning data graphs, and such algorithms may be used in collaboration with embodiments of the present invention in order to determine how to partition the data graph. For example, it may be that usage-based statistics are taken into account so that groups of vertices that tend to be queried together are included in the same graph partition. Alternatively or additionally, topographical considerations such as minimising the number of edges (also referred to as arcs or interconnections) that cross partition boundaries may be taken into account.

Triples provide for encoding of graph data by characterising the graph data as a plurality of subject-predicate-object expressions. In that context, the subject and object are graph nodes/resources of the graph data, and as such are entities, vertices, resources, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides a formalised structure for such triples.

A graph partition may be considered to be a region of the data graph. A graph partition defines how the data items encoding the data graph are grouped for storage. A data portion may be considered to be a plurality of data items grouped for storage (that is, treated as a unit for the purposes of being distributed to a storage server and stored). Hence, a graph partition defines the data items which are stored in a corresponding data portion. Thus, each data portion encodes a version of the corresponding graph partition. There may be more than one data portion encoding versions of the same graph partition. The number of data portions encoding versions of the same graph partition is configurable. The graph partition corresponding to a data portion is not necessarily entirely encoded by each of the corresponding data portions. There may be a data portion corresponding to a graph partition that includes, for example, the central vertices of the graph partition, one or more boundary vertices, and vertices on a shortest path between each of the central vertices and each of the one or more boundary vertices. A data portion may encode parts of the graph in addition to the corresponding graph partition, for example, boundary vertices of neighbouring graph partitions.

Where two or more data portions each encode versions of the same graph partition, the data portion distribution controller is configured to allocate each of the two or more data portions to different data storage servers. By this technique, the opportunities for concurrent accesses being made to the data portions, and thus the graph partition, are enhanced.

Access requests to the data graph are received and distributed by the data access module. The data access module may be configured to determine which graph partitions to query to satisfy each access request, and distribute the received access requests to data storage servers storing data portions encoding versions of the respective determined graph partitions. For example, a mapping of graph partitions to data storage servers may be maintained at the data access module. A data access event in such a case may be the distribution of an access request to a data storage server or to a particular data portion stored on a data storage server. Alternatively, the data access module may be configured to distribute the received access requests to all nodes.

The received access requests give rise to events in the storage system. These events may be recorded as data access events by the graph partition usage monitor. The precise combination of data access events that are recorded, and the format in which they are recorded, will vary depending on implementation. As an example, recorded data access events may be the reading of a data item from a data portion as a result satisfying a received access request, and the reading may be recorded by incrementing a count of results attributed to one or more of the following: the data portion, the graph partition encoded by the data portion, and/or the data storage server on which the data portion is stored. Another example of a recorded data access event may be the receipt and processing of an access request by a data storage server (for example, in embodiments in which the data access module is configured to determine which graph partitions to query to satisfy each access request, and distribute the received access requests to data storage servers storing data portions encoding versions of the respective determined graph partitions). Again, that may be recorded as a count attributed to the determined graph partition or to the data portion encoding the determined graph partition on the data storage server, or as a count attributed to the data storage server. Access events may be recorded in association with a timing at which the event occurred or be made time dependent in some other way, so that counts occurring in a particular time period may be queried.

The counts (as an example of statistics) recorded by the graph partition usage module are utilised by the data portion distribution controller as a means to determine which graph partitions should be replicated more times than at present, and which should be replicated fewer times than at present. The statistics provide a means of determining which graph partitions are busier or are accessed concurrently on more occasions than others, and therefore cause query handling bottlenecks, for example if the number of concurrent accesses is higher than the number of management modules able to access data portions encoding versions of the graph partition at a particular time. Thus, the data portion distribution controller, by increasing or decreasing the number of data portions encoding versions of a particular graph partition from among the plurality of graph partitions, is able to control the ability of the storage system to deal with concurrent accesses to the particular graph partition. The statistics recorded by the graph partition usage monitor provide a source of information on which to base decisions regarding which numbers (being the number of data portions encoding a version of a graph partition from among the graph partitions) to increase and which to decrease.

The particular analysis and decision making rationale implemented by the data portion distribution controller will vary according to the available recorded statistics and the usage environment of the storage system. However, the procedure followed by the data portion distribution controller may be to identify subsets of the data graph or of the data encoding the data graph at which data access events are disproportionately common, wherein the proportionality is determined with respect to the size of the subset relative to the data graph as a whole or to the summed size of the data portions stored on data storage servers storing the data portion.

As a first example of a procedure followed by the data portion distribution controller: the recorded statistics comprise a distribution of data access events across the data portions over a period of time and a distribution of data access events across the plurality of data storage servers over the period of time; and the data portion distribution controller is configured to select a partition from among the graph partitions for which to increase the number of data portions that encode versions of the selected partition by: identifying a data portion for which the number of data access events at the identified data portion as a proportion of the number of data access events at the data storage server storing the identified data portion exceeds the size of the identified data portion as a proportion of the total size of data portions stored on the data storage server storing the identified data portion by more than a threshold amount; and selecting the graph partition of which a version is encoded by the identified data portion as the graph partition for which to increase the number of data portions encoding versions thereof.

For example, the data access events may be data items read from the data portion in response to an access request. The first exemplary procedure identifies whether or not the frequency of data access events per unit of data at a data portion is higher than the frequency of data access events per unit of data at the data storage server storing the data portion. The size of data portion and the size of the data storage server, and hence the unit, may be a number of data items or may be a unit of storage space such as kB. If the frequency per unit of data at the data portion is higher than the frequency per unit of data at the data storage server by more than a threshold amount, the data portion is replicated and the new replica added to a data storage server not already storing a data portion encoding a version of the same graph partition. The threshold amount may be a predetermined amount or may be a predetermined portion of the number of data access events at the data storage server over the time period, for example, 10%. The predetermined portion is configurable by a database administrator.

As an alternative or additional procedure to the first exemplary procedure, the second exemplary procedure is set out below.

In the second exemplary procedure, the recorded statistics comprise a distribution of data access events across the graph partitions; and the data portion distribution controller is configured to select a graph partition from among the graph partitions for which to increase the number of data portions that encode versions of the selected partition by: identifying a graph partition for which the number of data access events at the identified graph partition per data portion encoding the identified graph partition exceeds the total number of data access events at the one or more data storage servers storing data portions encoding the identified graph partition moderated by the size of the data portions encoding the identified graph partition by more than a threshold amount.

The second exemplary procedure differs from the first exemplary procedure in that it seeks to identify graph partitions that are commonly queried (bearing in mind that a data access event at a graph partition may be a query being made which returns a result from within the graph partition) and increases the replication of graph partitions so identified.

The first and second exemplary procedures provide techniques for adjusting the number of replicas of the different graph partitions in response to the distribution of data access events over a period of time. At initiation of the data graph, when there are no usage statistics upon which to make adjustments, or at another time such as following a particular system event, it may be necessary to use structural properties of the graph to determine how many versions of each graph partition should be stored. For example, the data portion distribution control module is further configured to determine, for each of the plurality of graph partitions, the number of data portions encoding a version of the graph partition to store, in dependence upon one or a combination of more than one properties of the graph partition; the one or more properties comprising at least either: a first property measured by a first value proportional to a number of edges in the graph partition; and a second property measured by a second value based on the average and maximum degree of the vertices in the graph partition compared to the average and maximum degree of the vertices in the data graph.

The determination by the data portion distribution controller may be as an initial calculation or may be in response to a system event. Advantageously, the first property is very easy to calculate and results in more versions of larger graph partitions being stored. The potential for concurrent access requests causing a processing bottleneck is greater at larger graph partitions, so the first property takes this into account. Advantageously, the second property leverages the assumption that vertices with a higher degree are more likely to be queried, and therefore are more likely to be the cause of processing bottlenecks. The second property takes this assumption into account in deciding how many times each partition should be replicated.

The first property may be measured by simply obtaining a count of the number of edges encoding each graph partition. In a more sophisticated example, the edges may be characterised as one out of a predetermined set of different edge types. For example, the data portion distribution control module may be configured: to identify each edge as being one of a predetermined set of edge types, each of the predetermined set of edge types having an associated coefficient; and to calculate the first value by summing the product of, for each edge type, the number of edges in the graph partition identified as being of the edge type and the associated coefficient. Advantageously, such a procedure recognises that certain types of edge, such as those which define the ontology of the domain and/or provide class definitions may be queried more often, and therefore be more likely to cause processing bottlenecks.

Having determined the number of versions of each graph partition to store, embodiments may include an additional step of determining which vertices to encode in each version of the graph partition. It may be that each version encoding a particular graph partition encodes each vertex in the graph partition, and then some vertices from other graph partitions in addition. Control of populating the encoded versions of a graph partition may be performed by a module at the controller, for example the distributed data graph storage system may further comprise: a boundary replication module, configured, for each graph partition, to add to each data portion encoding a version of the graph partition: a copy of data encoding each of a first group of vertices, the first group of vertices being each vertex neighbouring a boundary vertex of the graph partition and being from a graph partition other than the graph partition; and a copy of data encoding each of a second group of vertices which is determined by the boundary replication module to have satisfied a criterion assessing binding between the member of the second group of vertices and the graph partition, the second group of vertices being each vertex neighbouring the first group of vertices and being from a graph partition other than the graph partition.

A boundary vertex of a graph partition is a vertex belonging to the graph partition and being connected to the or each of one or more vertices belonging to other graph partitions via a single edge. Advantageously, encoding boundary vertices from graph partitions neighbouring a particular graph partition in the same data portion in which the particular graph partition is encoded can help to reduce cross boundary traversal paths, which ultimately reduces the potential for processing bottlenecks at the data graph access level. The criterion assessing binding provides a mechanism for determining which boundary vertices from neighbouring graph partitions to include and which not to include, thereby assisting in avoiding dedicating unnecessary storage space to data portions.

The particular form of the criterion assessing binding will depend upon the specific requirements of the data graph and its applications. An exemplary form of criterion in data graphs which attribute distances or path lengths to edges is to calculate the radius of the graph partition being encoded both with and without the candidate boundary vertex, and to compare the two. For example, the boundary replication module may be configured to calculate, for each member of the second group of vertices: a first radius, being the radius of the union of the graph partition and the member of the second group of vertices; and a second radius, being the radius of the graph partition; and the member of the second group of vertices is determined to have satisfied the criterion assessing binding between the member of the second group of vertices and the graph partition if the first radius is smaller than the second radius.

The radius of a sub-graph including a graph partition is determined by calculating the shortest path from the or each of the central vertices of the graph partition to of the edge vertices of the sub-graph, and setting the longest of the calculated shortest paths as the radius. Path lengths may be attributed to each edge as a property of the edge. Alternatively, the data graph may be homogenous and each edge be attributed the same path length, so that calculating a path length from one vertex to another is performed by counting the number of edges on the path. A vertex a vertex belonging to a sub-graph may be considered to be at the edge of the sub-graph if it is not enclosed by edges connecting vertices also belonging to the sub-graph. Central vertices may be determined by using a betweenness centrality metric and selecting the vertices having the top n scores (n being a positive integer which is either predetermined, or is a predetermined proportion of the number of vertices in the graph partition). As an alternative technique for finding the central vertices of a graph partition, a degree-based metric can be used, so that the top n vertices when ranked in order of degree are the central vertices (again, n being a positive integer which is either predetermined, or is a predetermined proportion of the number of vertices in the graph partition). Finally, the shortest paths between each pair of vertices in the graph partition may be calculated and the vertices ranked according to the number of appearances, with the top n being deemed the central vertices (again, n being a positive integer which is either predetermined, or is a predetermined proportion of the number of vertices in the graph partition).

Discussed above and elsewhere is a technique for adapting the number of times each graph partition is encoded in storage in response to the distribution of data access events among the graph partitions, with the aim of reducing processing bottlenecks associated with concurrent accesses being made to particular sections of stored data. As an alternative or additional technique for adapting the stored data in order to reduce processing bottlenecks associated with concurrent accesses, it may be that the graph partitions are modified in response to a usage-based binding measure. For example, the distributed data graph storage system may further comprise a partition boundary update module. Such a partition boundary update module may itself comprise: a graph-based binding calculator configured to calculate, a graph-based binding value representing graph-based binding between a target vertex and a graph partition; and a usage-based binding calculator configured to calculate a usage-based binding value representing usage-based binding between a target vertex and a graph partition; the partition update module being configured to perform partition updates for each of the graph partitions, a partition update comprising, for each vertex neighbouring a boundary vertex of the graph partition and being from one of the plurality of graph partitions other than the graph partition as the target vertex, using the graph-based binding calculator to calculate the graph-based binding value representing graph-based binding between the target vertex and the graph partition, and using the usage-based binding calculator to calculate the usage-based binding value representing usage-based binding between the target vertex and the graph partition, calculating an overall binding value by combining the graph-based binding value and the usage-based binding value, and, if the overall binding value exceeds a predetermined threshold, adding the target vertex to the graph partition and removing the target vertex from its current graph partition. Adding the vertex to the graph partition may include adding a copy of the vertex to each data portion encoding a version of the graph partition.

The graph-based binding value is calculated based on information derivable from the data graph itself, and may be confined to structural properties of the graph. The usage-based binging value, on the other hand, is calculated based on information derivable from a record of data access statistics such as graph traversal routes and data access events.

Advantageously, the partition update module defined above provides a mechanism for combining both structural properties of the data graph itself, and records of where in the data graph data access events have occurred, in order to group together vertices that can be expected to be queried together and therefore to reduce processing overheads associated with cross-partition graph traversals.

As an example of how the graph-based binding value might be calculated, the shortest path(s) to the one or more central vertices may be taken into account, with the central vertices having been determined by any of the means discussed in this document. In a particular example: the graph-based binding value is based on, for each central vertex in the graph partition, the length of the shortest path from the target vertex to the central vertex as a proportion of the length of the longest from among the shortest paths from the central vertex to each of the vertices at the edge of the graph partition.

Advantageously, such a technique takes into account the current boundary of the graph partition and compares the target vertex, which is effectively a candidate new boundary vertex, with the current boundary.

The usage-based binding value, on the other hand, is not based on structural properties of the data graph, but is based on data access events and specifically the traversal paths defined by the vertices returned as results to a query. As a particular example of usage-based binding value, the usage-based binding value is based on the proportion of the total number of graph traversal paths overlapping the graph partition over a selected time period that included the target vertex in the graph traversal path. A graph traversal path being a series of connected vertices and edges connecting the connected vertices, the series being accessed as a consequence of the data access module processing an access request. In other words, the usage-based binding value measures how many of the queries to the data graph in the selected time period that returned results from the graph partition also returned the target vertex as a query result.

Advantageously, the usage-based binding provides a mechanism to take the usage of the graph into account when deciding where the boundaries between graph partitions should fall, and favours storing vertices together that are commonly accessed in the same queries.

When calculating the usage-based binding, it may be that all graph traversals taking place in the selected time period are given equal weighting. Alternatively, the more recent graph traversals may be given a higher weighting. For example, the calculated usage-based binding value may be moderated by a time-decaying factor based on the time between the calculation and the end of the selected time period.

Advantageously, moderating the usage-based binding value by a time-decaying factor lends a greater significance to more recent calculations, since in some implementations these are more likely to be indicative of future trends in graph queries.

The procedures detailed above for adjusting partition boundaries may result in a particular graph partition expanding and others shrinking. It may therefore be desirable to implement a maximum partition size limit, which if exceeded causes any new vertices selected for addition to the partition to instead be placed in an overflow data portion. Such a policy may be implemented as follows: if adding the target vertex to the graph partition causes the graph partition to exceed a predetermined maximum partition size, a new data portion is generated comprising data encoding the target vertex, and, for the or each of the one or more central vertices of the graph partition, data encoding the central vertex and data encoding the or each of the vertices on the shortest path from the target vertex to the central vertex.

Advantageously, the new data portion is efficient in terms of space because it does not replicate the entire graph partition, and functional in terms of its inclusions, containing the most important vertices from the existing graph partition along with the target vertex. The imposition of a maximum partition size prevents bias effects in the calculation of binding values from skewing the distribution of data among graph partitions too much.

Embodiments of another aspect of the present invention include a method for storing a distributed data graph representing information as vertices interconnected by edges denoting relationships between the connected vertices, the data graph being composed of a plurality of graph partitions and being stored as a plurality of data portions distributed among a plurality of data storage servers, wherein each data portion encodes a version of one from among the plurality of graph partitions. The method comprises: when two or more data portions each encode a version of the same graph partition from among the plurality of graph partitions, to allocating the two or more data portions to different data storage servers from among the plurality of data storage servers; receiving access requests for the stored data graph; determining which graph partitions to query to satisfy each access request; distributing the received access requests to data storage servers storing data portions encoding versions of the respective determined graph partitions; recording statistics representing the distribution of received access requests to data portions; and increasing or decreasing the number of data portions encoding versions of a particular one from among the graph partitions in dependence upon the recorded statistics.

Furthermore, invention embodiments may include a suite of computer programs which, when executed by a distributed network of computing apparatuses, cause the distributed network of computing apparatuses to function as a distributed data graph storage system embodying the invention.

Furthermore, embodiments of the present invention include a computer program or suite of computer programs, which, when executed by a system of computing apparatuses including a distributed network of storage units cause the system to perform a method embodying the present invention.

Embodiments of a further aspect include a distributed data graph storage system, configured to store a data graph representing information as vertices interconnected by edges denoting relationships between the connected vertices, the data graph being composed of a plurality of graph partitions; the data graph storage system comprising: a plurality of data storage servers each configured to store one or more data portions, wherein each data portion encodes a version of one from among the plurality of graph partitions; and a partition boundary update module, the partition boundary update module comprising: a graph-based binding calculator configured to calculate, a graph-based binding value representing graph-based binding between a target vertex and a graph partition; and a usage-based binding calculator configured to calculate a usage-based binding value representing usage-based binding between a target vertex and a graph partition; the partition update module being configured to perform partition updates for each of the graph partitions, a partition update comprising, for each vertex neighbouring a boundary vertex of the graph partition and being from one of the plurality of graph partitions other than the graph partition as the target vertex, using the graph-based binding calculator to calculate the graph-based binding value representing graph-based binding between the target vertex and the graph partition, and using the usage-based binding calculator to calculate the usage-based binding value representing usage-based binding between the target vertex and the graph partition, calculating an overall binding value by combining the graph-based binding value and the usage-based binding value, and, if the overall binding value exceeds a predetermined threshold, adding the target vertex to the graph partition and removing the target vertex from its current graph partition.

According to the further aspect, the graph-based binding value may be based on, for each central vertex in the graph partition, the length of the shortest path from the target vertex to the central vertex as a proportion of the length of the longest from among the shortest paths from the central vertex to each of the vertices at the edge of the graph partition.

Furthermore, in the further aspect, the usage-based binding value may be based on the proportion of the total number of graph traversal paths overlapping the graph partition over a selected time period that included the target vertex in the graph traversal path, a graph traversal path being a series of connected vertices and edges connecting the connected vertices, the series being accessed as a consequence of the data access module processing an access request.

Optionally, in the further aspect, the calculated usage-based binding value is moderated by a time-decaying factor based on the time between the calculation and the end of the selected time period.

Furthermore, in the further aspect, if adding the target vertex to the graph partition causes the graph partition to exceed a predetermined maximum partition size, a new data portion is generated comprising data encoding the target vertex, and, for the or each of the one or more central vertices of the graph partition, data encoding the central vertex and data encoding the or each of the vertices on the shortest path from the target vertex to the central vertex.

Embodiments will now be described, purely by way of example, with reference to the accompanying drawings, in which:-

Figure 1 illustrates a data storage system embodying the present invention;
Figure 2 illustrates a system architecture of an embodiment; and
Figure 3 illustrates data portions distributed to data storage servers in an embodiment.

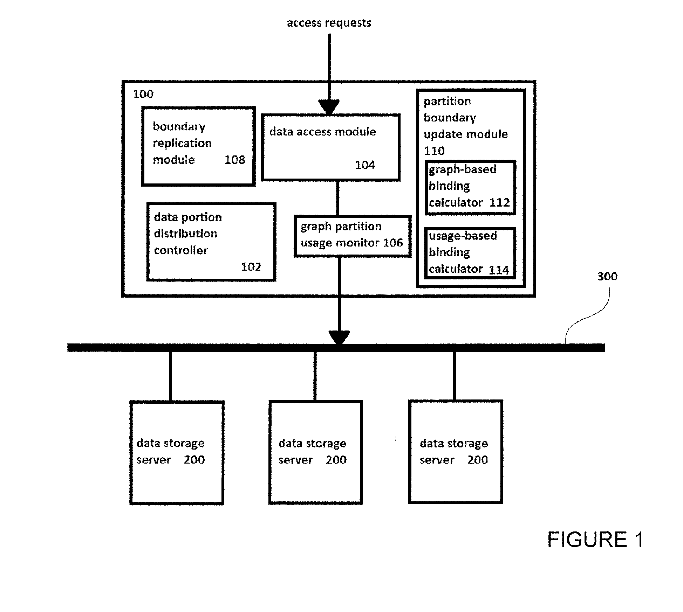

Figure 1 illustrates a data storage system embodying the present invention. A controller 100 is illustrated as an exemplary device combining the functionality of the data portion distribution controller 102, the data access module 104, the graph partition usage monitor 106, the boundary replication module 108, the partition boundary update module 110, the graph-based binding calculator 112, and the usage-based binding calculator 114. Each of the components 102-114 may be referred to as a functional module, and they may be referred to collectively as the functional modules. The functional modules are not necessarily all included in all embodiments. Functional modules 102, 104, and 106 may be provided independently of functional modules 110, 112, and 114, and vice-versa. The boundary replication module 108 is optional. The functional modules may all be combined in a single embodiment.

Each of the functional modules may be realised by hardware configured specifically for carrying out the functionality of the module. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, sensors (either via an operating system or otherwise), and other components of a computing device, in order to realise the functionality attributed to the functional module. The modules may also be referred to as units, and may be steps or stages of a method, program, or process. The illustration of a controller 100 combining the functional modules is illustrative of the fact that the functional modules may be combined. However, the functional modules may also be provided by separate devices.

The controller 100 may be realised by a single entity such as a computing device or server, or may be realised by more than one computing device operating collaboratively, for example, as a layer of a control protocol. Therefore, each functional module may be executed by components belonging to a plurality of computing devices, and the functional modules may be provided by more than one computing device.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

Each of the functional modules is configured to communicate with each of the other functional modules either via the communication network 300 or by exchange of data within the controller 100, and with the data storage servers via a communication network 300. The arrows illustrate the path of an access request arriving at the data access module 104, and then being distributed to the data storage servers 200, as monitored by the graph partition usage monitor 106.

The data graph is a manifestation of data stored on the data storage servers 200, and is a means for representing the stored data, both to a user and to other processes or entities external and internal to the data storage system. It may be that the data graph is encoded as triples, for example, RDF triples, and that a resource is defined by the triples in which it is named as the subject. A graph partition is a subset of the data graph, or a sub-graph, and is a portion or region of the data graph. A graph partition may comprise interconnected vertices only, or may comprise vertices which are not connected to one another. A data portion is an encoded version of a graph partition, that is to say, it is the underlying data which are represented as the graph partition. Each data portion encoding the same graph partition may be replicas of one another. Alternatively, data portions encoding the same graph partition may be different from one another. For example, they may differ in terms of which boundary vertices from neighbouring graph partitions they encode.

An exemplary form of stored data for encoding a data graph is triples, and in particular RDF triples. Triples provide for encoding of graph data by characterising the graph data as a plurality of subject-predicate-object expressions. In that context, the subject and object are graph nodes/resources of the graph data, and as such are entities, vertices, resources, instances, or concepts, and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

The data portion distribution controller 102 is responsible for allocating data portions encoding graph partitions to data storage servers 200. In particular, the data portion distribution controller 200 is configured, when two or more data portions each encode a version of the same graph partition from among the plurality of graph partitions, to allocate the two or more data portions to different data storage servers from among the plurality of data storage servers. The data portion distribution controller may maintain a mapping of which data storage servers 200 store data portions encoding which graph partitions, in order that data portions encoding the same graph partition are not stored on the same data storage server 200.

In order to deal with potentially unbalanced query processing (access requests not being evenly-distributed among the graph partitions), the replication factor (being the number of data portions encoding each graph partition) may be non-uniform across the different graph partitions. The number of data portions encoding each graph partition is decided by the data portion distribution controller 102. On an initial basis, i.e. before sufficient access requests have been made to the data graph to observe which of the graph partitions are more frequently queried, the following policies can be used separately or in combination in order to utilise graph properties to determine how may data portions should encode each graph partition:

1. The number of edges in the graph partition comparing with those in other graph partitions; and/or
2. The degree (the number of edges incident to the vertex) of vertices in the graph partition comparing with those in other graph partitions.

A first technique for determining initially how many data portions should encode each graph partition is as follows:

Assume a graph has K edges. Each edge will have $p_{edge} = \alpha \cdot 1/K = \alpha \cdot pavg$ probability to be queried, where $\alpha$ is the coefficient for adjusting the significance of a graph edge based on a characterisation of the edge from a predetermined set of edge types. For instance, in an ontology, an edge representing semantic hierarchical structure may be more important than those representing a particular attribute of the concepts, and hence attract a higher value of $\alpha$.

There are *M* available slots for initial allocating to data portions encoding versions of graph partitions among the M or fewer data storage servers 200. Optionally, M may be selected as a value smaller than the total number of available slots in order to leave room for adding more data portions in response to usage. For simplicity, the difference in graph partition sizes is ignored and each data storage server 200 simply has one or more slots each large enough to store a data portion encoding any of the graph partitions. An equation to compute the number of data portions ($n_{rep \cdot edge}$) encoding versions of a partition $P_i$ (the replication factor of $P_i$) based on edge properties is as follows:

$$n_{rep.edge} \approx p_{avg} \times edge(P_i) \times M/capacity(D)$$

Since the data portion distribution controller 102 is configured to allocate data portions encoding the same graph partition to different data storage servers 200, this equation gives an exemplary technique for calculating on how many different data storage servers the graph partition $P_i$ should be stored. In the above equation, $p_{avg} \times edge(P_i)$ gives the aggregated likelihood the edges in $P_i$ being queried. Triple-based data effectively stores a data graph as a plurality of edges, hence the number of edges of a particular type and the probability of it being queried should give the overall likelihood of the partition being queried. The text setting out P_avg did not emphasise sum to 1 constraint for probability. Alternatively,

$$\sum p_{avg} \times edge(p \in P_i)$$

could be used in place of $p_{avg} \times edge(P_i)$
wherein the sum is over the different possible categories of edge.
M /capacity(D) simply gives how many data servers (D) are needed for M available slots.
A second technique for determining initially how many data portions should encode each graph partition is as follows:

The assumption is that when a partition demonstrates higher degree (that is to say, includes a high number of edges), it is more likely that a query will be evaluated against this partition than if it demonstrated a lower degree. High vertex degree is more likely to be on a query path. Distributing the partition to multiple data storage servers effectively increases the processing units that can access encoded versions of the graph partition and therefore can increase the chance of concurrent query processing and thus avoid this partition becoming a performance bottleneck.

1. Compute the average degree, max and min degree of a graph partition which are denoted as $deg(P)$, $\Delta(P)$, and $\delta(P)$, respectively.
2. Compute the average degree and maximum degree of the original graph as $deg(G)$, $\Delta(P)$, respectively.

An equation to compute the number of data portions ($n_{rep.vertex}$) encoding versions of a partition $P_i$ (the replication factor of $P_i$) based on vertex properties is as follows:

$$n_{rep.vertex} \approx \alpha \cdot M + \beta \cdot \log \frac{deg(P)}{deg(G)} + \gamma \cdot \log \frac{\Delta(P)}{\Delta(G)}$$

This equation can be interpreted as favouring a higher replication factor for graph partitions containing vertices with high degree. The exact weighting attributed to each factor is adjustable by coefficients $\alpha$, $\beta$, and $\gamma$, which may be adjusted by a database administrator at system initiation.

In fact, both techniques can be combined in order to determine the actual number of data portions which should encode each graph partition on an initial basis. Alternatively or additionally, other strategies can be applied, including computing the betweeness of vertices and ensuring that those on the most shortest paths be distributed to many data nodes to increase bandwidth for concurrent accesses.

The consistency of data portions encoding versions of the same graph partition may be ensured by storing control information with each data portion detailing the location of other data portions encoding versions of the same graph partition in order that modifications to the stored data can be replicated at the other locations. When a vertex is updated, it must be updated on all the replicas. This operation ensures data consistency across the data storage system.

The initial calculation of replication factors is based purely on graph characteristics (structural properties of the graph) and the actual distribution of data access events, which may be the retrieval of a query result from a data portion, may not be consistent with the replication factor of the graph partitions. In other words, the most commonly queried graph partitions may not be those which were encoded by the most data portions as a result of the initial calculations. Consequently, there may be relatively more bandwidth for concurrent data accesses at graph partitions at which is not required, and relatively less bandwidth for concurrent data accesses at graph partitions at which it is required.)

A heavily connected and dense partition may only attract very few queries and thus the high replication factor initially attributed to the graph partition, and the high bandwidth (number of processing units) available to respond to queries to that particular graph partition becomes unnecessary. On the other hand, graph partitions previously considered less significant (i.e. having low degree and relatively fewer edges) can become the focus of frequent querying, and thus the low replication factor initially attributed to the graph partition, and the low bandwidth available to respond to queries to that particular graph partition becomes unnecessary.

The data portion distribution controller 102 is configured to respond to the actual usage of the graph partitions and to increase or decrease the number of data portions encoding versions of each graph partition in response to the distribution of data access events among the graph partitions. The original number of data portions encoding each graph partition (the replication factor of the graph partition), which is based on the structure of the data graph, is refined to reflect the actual use of the partition, with the principle that if a partition is used heavily in recent queries, the partition in general should be replicated to more separate data servers/nodes. Otherwise, the total number should dwindle to avoid unnecessary expenditure of storage space and resources.

We set out below exemplary techniques for determining for which graph partitions to increase the number of corresponding data portions, and for which to decrease the number of corresponding data portions.

An inequality is detailed below, which, if satisfied, identifies a graph partition satisfying the query as a candidate for increasing the number of corresponding data portions, and if not satisfied identifies the graph partition not satisfying the query as a candidate for decreasing the number of data portions. A control algorithm may be imposed in order to monitor which graph partitions satisfy/do not satisfy the inequality over a period of time, and then instructs increases and decreases in the number of data portions based on the monitoring.

Given the concurrent capacity of a data storage server $\tau_{dn}$, that is, the number of accesses that can be handled concurrently by a data storage server (how many queries that arrive concurrently can be handled together), and the number of data access events occurring at a data portion $qn_{dr}$, the size of the data portion $s_{dr}$ and the total number of different data replica on a data node $n_{dr}$ (which the sigma is summed over), an exemplary inequality is:

$$qn_{dr} \geq \alpha \cdot (\tau_{dn} \times \frac{s_{dr}}{\sum_i s_{dr}})$$

Alternatively, $\tau_{dn}$ is the total number of queries received across the entire data graph in the time period in question. A data access event may be a received access request being directed to the data portion or may be the return of a data item from the data portion in response to a received access request. The inequality has an adjustable factor $\alpha$ which determines the amount by which the number of data access events occurring at the data portion needs to exceed the size proportion. The graph partition encoded by the data portion is considered as a candidate for increase if one or a predetermined proportion of the data portions encoding the graph partition satisfy the inequality. An algorithm may be used to attribute data portions satisfying the inequality to graph partitions and thereby to determine when the replication factor of a graph partition should be increased and when it should be decreased.

Alternatively, a function can be used to monitor usage, and when the function reaches a particular value (at an upper or lower limit) the replication factor for a graph partition is increased/decreased (noting that the value is per data portion so for a graph partition it may be summed over data portions and divided by the current replication factor):

$$f(t) = \log\left(\alpha \cdot \frac{qn_{dr}(t) + \beta}{\tau_{dn} \times \frac{S_{dr}}{\sum_i S_{dr}}}\right)$$

So, when query number is proportional to size ratio, the result is 1. $\alpha$ and $\beta$ are factors which are adjustable by a system administrator in order to avoid situations when qn_dr = 0. $\alpha$ is a non-zero positive number. So when the graph partition is queried at a rate in proportion to its size, the result is 0. qn_dr(t) is the number of queries at the data portion over a time window (t), for example, a period of time tracking back from the current point of time.

As an alternative inequality to the one set out above, the following can be used. Given the total number of data access events at data portions encoding a graph partition $qn_p$, the replication factor of the graph partition $rn_p$, the concurrent capacity of a data node $\tau_{dn}$, the inequality is as follows:

$$\frac{qn_p}{rn_p} \geq \tau_{dn} \times \frac{1}{|S_{dr}|}$$

It states that a graph partition is considered as a candidate for increasing the replication factor if the total number of queries distributed to different data portions encoding the graph partition still exceeds the concurrent capacity of the data node in proportion of the number of different data replicas on the data node.

It is noted that the data access module 104 may be configured to route access requests to a graph partition evenly across multiple data portions encoding the graph partition in order to avoid processing bottlenecks.

The graph partition usage monitor 106 may maintain a record of which data portions are locked (i.e. which data portions have had an access request routed thereto and not yet responded) so that the routing of an access request to another data portion encoding the same graph partition is logged as a data access event.

The principle of the function of the data portion distribution controller 102 is to use either or both of the above inequalities in order to increase the number of data portions encoding graph partitions that have satisfied the inequality (or whose corresponding data portions have satisfied the inequality) and to decrease the number of data portions encoding graph partitions that have not satisfied the inequality.

The data access module 104 is configured to receive access requests for the stored data graph and to distribute the received access requests among the plurality of data storage servers. Optionally, the data access module 104 may be configured to receive access requests, to determine to which graph partitions the requests relate, and to distribute the received access requests to data storage servers storing data portions encoding versions of the respective determined graph partitions. A mapping for such a purpose may be maintained at the data access module 104 itself, or a mapping maintained at another module such as the data portion distribution controller 102 may be utilised. For example, the access request may be a query or range query specifying a particular range of vertices, so that any vertex falling within the particular range is returned as a query result. The location of any vertices may be determined by using the mapping.

Alternatively, the data access module may simply forward all access requests to all data storage servers 200. In such embodiments, the data access events which are monitored and which form the basis of statistics used by the data portion distribution controller may be, for example, a result being returned from a particular data storage server 200.

The graph partition usage monitor 106 is configured to record statistics representing the distribution among the data portions of data access events caused by the access requests. A data access event is a processing event linked to the handling of a received access request and which represents a use of a data portion, that is to say, entails some processing being performed by the data storage server 200 on which a data portion is stored. The data access event is attributed to the data portion from which the result is returned rather than the data storage server 200.

In some embodiments, the graph partition usage monitor 106 may monitor the distribution of received access requests among the graph partitions in addition to the data access events occurring at the data portions.

The boundary replication module 108 is configured, for each graph partition, to add to each data portion encoding a version of the graph partition: a copy of data encoding each of a first group of vertices, the first group of vertices being each vertex neighbouring a boundary vertex of the graph partition and being from a graph partition other than the graph partition; and a copy of data encoding each of a second group of vertices which is determined by the boundary replication module to have satisfied a criterion assessing binding between the member of the second group of vertices and the graph partition, the second group of vertices being each vertex neighbouring the first group of vertices and being from a graph partition other than the graph partition. To that extent, the boundary replication module 108 determines the population of each of the data portions.

An effective way of improving the performance of the data storage system in responding to access requests which require data spanning multiple graph partitions is replicating the boundary vertices. That is to say, a vertex at the boundary of two graph partitions (i.e. being in one graph partition but having an edge connecting to a vertex in another graph partition) is included in data portions encoding both graph partitions. The boundary replication module 108 is responsible for determining which boundary vertices should be replicated in which data portions. The actual boundary vertex replication mechanism can be realised in different ways depending on the data structure and the index mechanism of the underlying storage system. In addition to replicating boundary vertices, their neighbours may also be replicated in data portions encoding other graph partitions in order to reduce potential network traffic caused by queries crossing data portion boundaries.

As an exemplary procedure that may be followed by the boundary replication module each partition, whether the data portion encoding a version of a particular graph partition includes not only the boundary vertices from a neighbouring graph partition (the first group mentioned elsewhere in this document), but also the neighbours of those boundary vertices from the neighbouring graph partition (the second group mentioned elsewhere in this document) are duplicated is decided as follows:

Given partition $P_i$ and $P_j$ and a duplicated boundary vertex $v_b$, for an arbitrary vertex $v_x \in P_j$, if $\langle v_b, v_x \rangle \in P_j \wedge binding(v_b, v_x) \geq th$, add $v_x$ to $P_i$. The binding function may take into account graph-based and/or usage-based factors, and the value generated by the binding function is compared with a predetermined threshold. For $v_x$ a neighbour of $v_b$, if its binding with $v_b$ is over a predefined threshold, it should be replicated and added to the data portions encoding the graph partition with which the boundary is shared.

The calculation of binding values for the purpose of determining whether or not to replicate a vertex $v_x$ from a graph partition $P_j$ in data portions encoding another graph partition $P_i$ can be performed in different ways. For example, a first approach is to compute first the radius of the another graph partition $P_i$ both with and without $v_x$ and then if the radius of $P_i$ with $\{v_x\}$ is smaller than the radius of $P_i$ without $v_x$, then $v_x$ should be added to $P_i$ (that is, data portions encoding versions of $P_i$ should also encode $v_x$). An alternative approach to determining whether or not to replicate a vertex $v_x$ from a graph partition $P_j$ in data portions encoding another graph partition $P_i$ is to compute the average distance between $v_x$ and the central vertices of $P_i$ to compare the computed average distance with the average distance between $v_b$ and the centres. If the former is shorter than the latter then $v_x$ should be added to $P_i$ (that is, data portions encoding versions of $P_i$ should also encode $v_x$).

Duplication (inclusion of vertices from one partition in data portions encoding versions of another partition) may be restricted to only direct neighbours (second group) of the boundary vertices (first group) for better space efficiency.

A partition must store also information about duplicated vertices locality. When a vertex is duplicated, the information about the partition number (where all the replicas are) should be stored with all the data portions that contain that vertex. This control information is useful for maintaining data consistency on write operations to the affected vertices.

The partition boundary update module 110 is configured to determine modifications to the boundaries between graph partitions based on binding between vertices. Once an update has been determined, the partition boundary update module 110 is configured to instruct an update of the stored data portions in order to realise the modifications. The partition boundary update module 110 may be configured to take into account both structural factors (properties of the data graph itself) and usage factors in determining whether and how to modify the graph partition boundaries. The dynamic nature of the graph partition boundaries, and possibly changes to the data graph itself, will result in calculations of structural factors needing to be updated periodically or in response to certain events such as a boundary moving or a new vertex being added to, or an existing vertex being removed from, a particular graph partition.

The partition boundary update module 110 may comprise one or both of a graph-based binding calculator 112 and a usage-based binding calculator 114. The graph-based binding calculator 112 is configured to generate values representing the structural factors taken into account by the partition boundary update module 110 in determining modifications to the boundaries between graph partitions. The graph-based binding calculator 112 is configured to access the data portions to analyse the structure of the graph partitions and generate representative values. The usage-based binding calculator 114 is configured to generate values representing the usage factors taken into account by the partition boundary update module 110 in determining modifications to the boundaries between graph partitions. The usage-based binding calculator 114 may access statistics generated by the graph partition usage monitor 106, or may generate statistics itself, in order to generate values.

In addition to determining modifications to boundaries, the partition boundary update module 110 may be configured to determine where in the data graph the boundaries between graph partitions should fall initially.

Even though graph partition is a NP-hard problem, there are algorithms for quick partition with reasonable quality, in terms of ensuring high intra partition binding and low inter partition binding (as number of cut edges or vertex closeness). When selecting a partition algorithm, a prerequisite is that the target graph is directed, acyclic, and labelled, with or without edge weights. Edge weights, or path lengths, may be used in embodiments to represent distances between vertices linked by the edge. In other embodiments, the edges may be homogenous in terms of their weighting (this is different from the edges themselves being homogenous which is discussed below). An RDF graph is used as an example of a data format. In the case of RDF, edge weights are not inherently catered for in the data format. However, one of the following solutions may be used for annotating the data items with weightings:

- when the edges are homogeneous (i.e. the edges are all labelled the same), the storage space reserved for the RDF edge label can be used to store the length value attributed to the edge; or
- length values can be concatenated to edge labels and during the computational procedure extracted by parsing the labels with a separate read operation; or
- a non-RDF construct can be used such as XML tagging can be used, which requires specific processing to be performed for parsing and extracting;
- edge attributes such as length values can be emulated using special relation concepts, in combination with complementary ontological reasoning and graph analysis procedures.

Irrespective of precise data format, many algorithms for partitioning the data graph can be applied. For example, the Kernighan-Lin algorithm (Kernighan & Lin, 1970) or multilevel partition algorithm are possible candidates.

The initial partitioning process may be computationally expensive and may be performed off-line using computing resources that might not be available at a later stage when the graph has been deployed.

The partition boundary update module 110 may perform the initial partitioning using a min-cut based partition algorithm which generates results $P_i = P_1 ... P_n$ as partitions of Graph $G = \langle V,E \rangle$ (the graph being represent by vertices and edges). The algorithm is implemented in a manner which generates graph partitions having a size that does not exceed the storage capacity of a data server 200. Indeed, the maximum partition size may be significantly smaller than the storage capacity so that 2 or more partitions can be encoded on each data storage server 200. For example, data storage servers 200 may accommodate more than one encoded graph partition with the aggregate data size smaller than the storage capacity (i.e. $\sum size(P_i) \leq \sum capacity(S_j)$ where $S_j = S_1 ... S_m$ is the number of data storage server. When deployed on the distributed storage system, a data storage server can, therefore, contain multiple encoded graph partitions (or data portions).

The initial partition is generated by the partition boundary update module and made ready for distributed deployment among the plurality of data storage servers 200 by the data portion distribution controller 102.

The initial partitioning is based purely on graph characteristics (structural properties of the graph) and the placement of boundaries, which is intended to put strongly-bound vertices in the same graph partitions, may not reflect the vertices which are frequently queried together, and therefore lead to high processing cost in terms of cross boundary queries. This may be caused by, for example, vertices which are considered further apart based on graph characteristics co-occurring frequently in graph queries and thus demonstrating strong binding in terms of usage. The partition boundary update module 110 implements usage-based partition updates which can then be leveraged to adapt the placement of boundaries between graph partitions to reduce the frequency of queries which traverse across graph partition boundaries (or data portion boundaries) and hence lead to better overall query performance.

The partition boundary update module calculates the partition binding of a vertex, that is to say, a quantity representing the strength of the vertex's membership in a partition. An exemplary technique for calculating partition binding is computed as follows, and includes a graph-based binding value, which may be calculated by the graph-based binding calculator 112, and a usage-based binding value, which may be calculated by the usage-based binding calculator 114:

An existing partition has central vertices. The binding of a vertex against a partition is computed as the closeness centrality of the vertex against all the central vertices of the partition. In other words, it is the sum of length of the shortest path from the vertex of the central vertices of the partition.

The distance value $d(v, c_i)$ is normalised using the radius of $c_i$ of the graph partition to reflect the binding. $r_{c_i}$ can be considered as the longest shortest path to the edge of the graph partition from a centre $c_t$.

$$b_g(c_i) = 1 - \frac{d(v, c_i)}{r_{c_i}}$$

The overall binding is then normalised by summing bg values over each of the central vertices $c_i$ and dividing by the number of central vertices as follows:

$$B_g = \frac{\sum_{c_i \in P_j} b_g(c_i)}{|c_i|}$$

This equation gives the overall distance between an arbitrary vertex and the (multiple) centres of the partition, and is an example of how the graph-based binding value may be calculated. From the topologic perspective, this measure is static.

A query (exemplary of an access request) received by the data access module 104 and evaluated against the stored data may be considered to represent a graph traversal path - in other words a linked subset of graph vertices. By recording graph traversal paths, for example at the graph partition usage monitor 106, a usage-based binding measure of how strongly a vertex is bound to a partition can be calculated. An exemplary technique for calculating the usage-based binding value is represented by the below equation:

$$b_q = \frac{n_q(v)}{N_q}$$

Where $n_q(v)$ is the number of paths satisfying a query and in the meantime has $v$ on the query path, $N_q$ is the total number of paths satisfying the query that overlap the partition.

Over a given period of time in usage history, the total usage-based binding value is computed by summing the bq for each relevant query (queries overlapping the graph partition - having at least one traversal path as a query outcome that includes a vertex in the graph partition) over all relevant queries:

$$B_Q = \sum_{q \in Q} b_q$$

Optionally, the time at which $B_Q$ is calculated can be taken into account, so that more recent calculations are given a higher weighting.

$$B_Q^t = e^{-\lambda(t-t_0)} B_Q$$

As an alternative way of taking the timing of queries into account, the time decaying factor can be applied to each component query in the summation as follows:

$$B_Q^t = \sum_{q \in Q} b_q e^{-\lambda(t-t_q)}$$

The overall binding between a vertex and the partition may then be computed by normalizing the graph-based and usage-based binding values.

The partition boundary update module 110 is configured to dynamically adjust the boundaries between graph partitions based on the calculated binding values. A target vertex (vertex for which the binding with a partition is calculated, for example, a boundary vertex from a neighbouring graph partition at the boundary with the graph partition in question) with a binding value (combined graph-based and usage-based) exceeding a threshold binding value will be incorporated into the graph partition. The threshold binding value may be predetermined, or may the binding value calculated for the target vertex with the graph partition in which it is currently included).

When a graph partition reaches its size limit, and hence no additional vertices can be added without exceeding the maximum, those vertices in the graph partition which have the lowest binding values with the graph partition will be pushed out and moved to the partition that holds most of its neighbours. Alternatively, the distance to the centres of all other graph partitions may be calculated and the vertices selected to be moved out be added to the partition to which it has the shortest distance to the central vertices. Vertices moved out of a graph partition may be added to a new partition and then processing to find the graph partition to which they should be added be performed at the system refreshing stage. Vertices moved out of a graph partition may be selected from all vertices in the partition, or may be selected from among the boundary vertices. For example, it may be that the boundary vertices of the graph partition are ranked according to their binding value with the graph partition and the lowest n (n being one or more) selected for removal.

It is possible that the above technique for adjusting the graph partition boundaries adjustment produces unbalanced results (making some partitions and their replicas more favourable than others and thus bring those partitions to their maximum capacity, allocated by the storage system). Therefore, it may be that a maximum graph partition size is imposed, and a technique employed for processing graph partitions that reach the maximum (wherein the maximum may be a number of edges, a number of vertices, or a size of data encoding the graph partition).

For a graph vertex $v'$, if the graph partition to which it is determined that it should be added by the partition boundary update module 110 is full (has reached its maximum capacity preset by the system) while there are still slots available in either a data storage server storing a data portion encoding a version of the graph partition or in any other data storage server, a new data portion encoding a version of the same graph partition can be created in an available data slot. The new data portion is populated with data encoding $v'$ together with data encoding the vertices deemed to be the centres of the now full graph partition, in addition to data encoding all vertices on the shortest paths from $v'$ to each of the graph centres. This initial set is based on the consideration that the new data portion present a properly connected sub-graph and can already respond to path-based queries. It may be that the data storage system is restricted to the new data portion being stored on a data storage server already storing a data portion encoding the same graph partition.

An exemplary procedure is set out below, to be followed in the event that it is determined to add a vertex to a graph partition, but the graph partition is already at maximum size, and there are no available slots on a data storage server 200 storing data portions encoding versions of the graph partition. Those data storage servers 200 may be considered to be "stalled" because they have scheduled activities which have not yet been carried out. The partitioning of the data graph may be periodically refreshed by the partition boundary update module 110. The refresh can also be in response to a system event, such as a threshold percentage of graph partitions approaching their maximum size. For instance, when x% of graph partitions are at or within a predetermined percentage of their capacity (x being a configurable system variable, for example, 20), dynamic adjustment of graph partitions may be suspended until a refresh has been performed.

The data storage servers 200 each comprise a processor and a storage unit, and are configured to receive an access request (such as a query or range query) and to respond to the access request with any data items matching the request or satisfying the range specified by the request. Each data storage server may store more than one data portion. Each data storage server 200 may be configured to handle more than one concurrent access requests. The data storage servers 200 may be configured to notify the graph partition usage monitor 106 of the occurrence of particular data access events and to specify to which data portion the event should be attributed. For example, data access events may be one or more of the following: returning a data item from a data portion in response to an access request, handling an access request to a data portion, handling concurrent accesses to a data portion, handling a number of concurrent accesses to a data portion which exceeds the capacity of the data storage server 200 for concurrent accesses.

The communication network 300 may be wired or wireless, and is a means by which functional modules and data storage servers 200 are configured to exchange data, both with each other and among themselves.

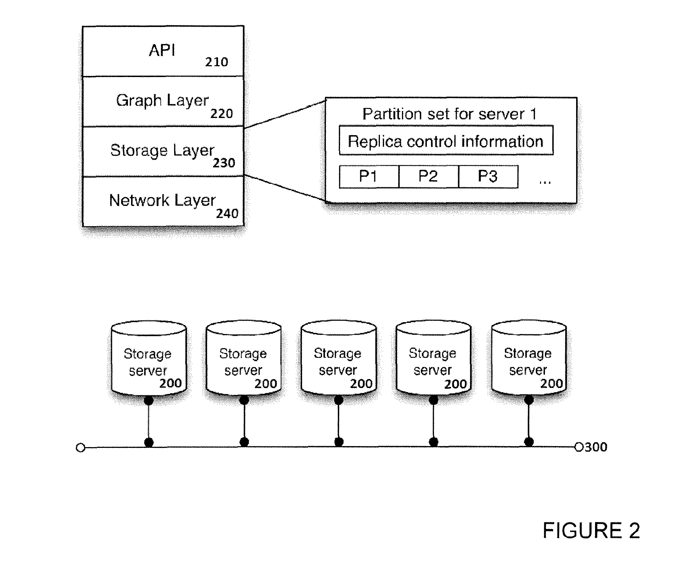

Figure 2 illustrates an exemplary system architecture. The system is composed of a set of data storage servers 200, interconnected by a communication network 300. The layers at the top of the picture are functions realised by the storage servers 200 and communication network 300. The controller 100 of Figure 1 may be provided as a separate device from the data storage servers 200 or may be realised by one of the data storage servers or by a plurality of the data storage servers 200 operating in collaboration with one another. All of the data storage servers 200 know the addresses of each of the other data storage servers and are configured to communicate with the other servers. Each server is composed of a communication layer 240, a storage layer 230, a graph abstraction layer 220 and an API layer 210.

The communication layer 240 is responsible for the communication among servers, needed for replication of partitions and vertices.

The storage layer 230 is responsible for storing data partitions on persistent storage and maintaining all the control information for maintaining the replicas of partitions and vertices. Read and Write operations are issued from the upper layers to the storage layer 230.

When a write operation is issued to a graph vertex which is replicated on more than one data storage server 200, the storage layer 230 is configured to utilise control information locating the remaining copies of the vertex to ensure that the write operation is carried out at all the replicas of that vertex.

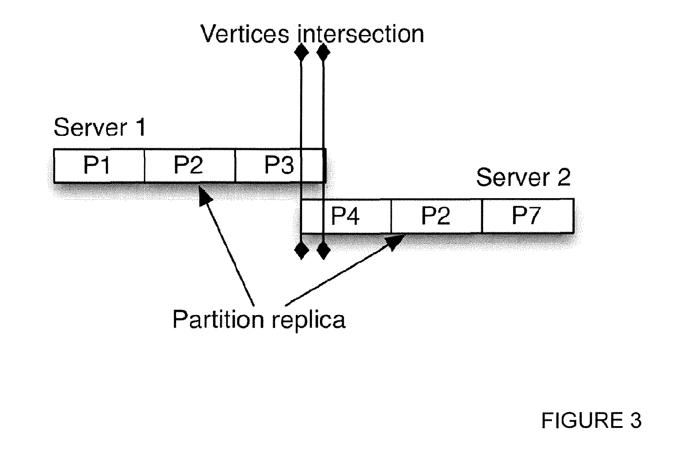

As illustrated in Figure 3, a particular graph partition (i.e. P2) can be duplicated in data portions stored on multiple data storage servers (server 1 and server 2). Figure 3 also illustrates the boundary replication at the intersection of partitions P3 and P4.

The graph layer 220 provides an abstracted version of the data stored in data portions on the data storage server in the form of a graph representation of the encoded data stored thereon. In addition, the graph layer 220 is configured to collaborate with the other data storage servers 200 in order to access a view of the entire data graph, which may be required when performing functions associated with, for example, the data access module 104.

The API layer 210 is responsible for exposing the data graph to client applications and is the layer at which data access requests are received and results are returned. Depending on the system architecture, a client application may be able to access the data graph by connecting to particular ones from the data storage servers 200, by connecting to any data storage server 200, or by connecting to a controller 100. For example, if the controller is realised by data storage servers 200 operating collaboratively, then access to the data graph is by connecting to the data storage servers 200 themselves. If the controller 100 is a separate device, then it may be that access to the data graph is only possible via the controller 100. Once connections from client applications are made, the system can distribute the connections throughout all the servers, so that the access request handling load is distributed and the system resources are optimised.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A distributed data graph storage system, configured to store a data graph representing information as vertices interconnected by edges denoting relationships between the connected vertices, the data graph being composed of a plurality of graph partitions;

   the data graph storage system comprising:

   a plurality of data storage servers each configured to store one or more data portions, wherein each data portion encodes a version of one from among the plurality of graph partitions;
   a data portion distribution controller configured, when two or more data portions each encode a version of the same graph partition from among the plurality of graph partitions, to allocate the two or more data portions to different data storage servers from among the plurality of data storage servers;
   a data access module configured to receive access requests for the stored data graph and to distribute the received access requests among the plurality of data storage servers;
   a graph partition usage monitor configured to record statistics representing the distribution among the data portions of data access events caused by the access requests; wherein
   the data portion distribution controller is configured to increase or decrease the number of data portions encoding versions of one from among the graph partitions in dependence upon the recorded statistics.

2. A distributed graph storage system according to claim 1, wherein
   the recorded statistics comprise a distribution of data access events across the data portions over a period of time and a distribution of data access events across the plurality of data storage servers over the period of time; and
   the data portion distribution controller is configured to select a partition from among the graph partitions for which to increase the number of data portions that encode versions of the selected partition by:

   identifying a data portion for which the number of data access events at the identified data portion as a proportion of the number of data access events at the data storage server storing the identified data portion exceeds the size of the identified data portion as a proportion of the total size of data portions stored on the data storage server storing the identified data portion by more than a threshold amount; and
   selecting the graph partition of which a version is encoded by the identified data portion as the graph partition for which to increase the number of data portions encoding versions thereof.

3. A distributed graph storage system according to claim 1 or 2, wherein
   the recorded statistics comprise a distribution of data access events across the graph partitions; and

the data portion distribution controller is configured to select a graph partition from among the graph partitions for which to increase the number of data portions that encode versions of the selected partition by:

identifying a graph partition for which the number of data access events at the identified graph partition per data portion encoding the identified graph partition exceeds the total number of data access events at the one or more data storage servers storing data portions encoding the identified graph partition moderated by the size of the data portions encoding the identified graph partition by more than a threshold amount.

4. A distributed data graph storage system according to claim 1, wherein the data portion distribution control module is further configured to determine, for each of the plurality of graph partitions, the number of data portions encoding a version of the graph partition to store, in dependence upon one or a combination of more than one properties of the graph partition;
the one or more properties comprising at least either:

a first property measured by a first value proportional to a number of edges in the graph partition; and
a second property measured by a second value based on the average and maximum degree of the vertices in the graph partition compared to the average and maximum degree of the vertices in the data graph.

5. A distributed data graph storage system according to claim 4, wherein the data portion distribution control module is configured:

to identify each edge as being one of a predetermined set of edge types, each of the predetermined set of edge types having an associated coefficient; and
to calculate the first value by summing the product of, for each edge type, the number of edges in the graph partition identified as being of the edge type and the associated coefficient.

6. A distributed data graph storage system according to claim 1, further comprising:

a boundary replication module, configured, for each graph partition, to add to each data portion encoding a version of the graph partition:

a copy of data encoding each of a first group of vertices, the first group of vertices being each vertex neighbouring a boundary vertex of the graph partition and being from a graph partition other than the graph partition; and
a copy of data encoding each of a second group of vertices which is determined by the boundary replication module to have satisfied a criterion assessing binding between the member of the second group of vertices and the graph partition, the second group of vertices being each vertex neighbouring the first group of vertices and being from a graph partition other than the graph partition.

7. A distributed data graph storage system according to claim 6, wherein the boundary replication module is configured to calculate, for each member of the second group of vertices:

a first radius, being the radius of the union of the graph partition and the member of the second group of vertices; and
a second radius, being the radius of the graph partition;
and the member of the second group of vertices is determined to have satisfied the criterion assessing binding between the member of the second group of vertices and the graph partition if the first radius is smaller than the second radius.

8. A distributed data graph storage system according to claim 1, further comprising: a partition boundary update module, the partition boundary update module comprising:

a graph-based binding calculator configured to calculate, a graph-based binding value representing graph-based binding between a target vertex and a graph partition; and
a usage-based binding calculator configured to calculate a usage-based binding value representing usage-based binding between a target vertex and a graph partition;
the partition update module being configured to perform partition updates for each of the graph partitions, a partition update comprising, for each vertex neighbouring a boundary vertex of the graph partition and being from one of the plurality of graph partitions other than the graph partition as the target vertex, using the graph-based binding calculator to calculate the graph-based binding value representing graph-based binding between the target vertex and the graph partition, and using the usage-based binding calculator to calculate the usage-based binding value representing usage-based binding between the target vertex and the graph partition, calculating an overall binding value by combining the graph-based binding value and the usage-based binding value, and, if the overall binding value exceeds a predetermined threshold, adding the target vertex to the graph partition and removing the target vertex from its current graph partition.

9. A distributed data graph storage system according to claim 8, wherein the graph-based binding value is based on, for each central vertex in the graph partition, the length of the shortest path from the target vertex to the central vertex as a proportion of the length of the longest from among the shortest paths from the central vertex to each of the vertices at the edge of the graph partition.

10. A distributed data graph storage system according to claim 8, wherein the usage-based binding value is based on the proportion of the total number of graph traversal paths overlapping the graph partition over a selected time period that included the target vertex in the graph traversal path.

11. A distributed data graph storage system according to claim 10, wherein the calculated usage-based binding value is moderated by a time-decaying factor based on the time between the calculation and the end of the selected time period.

12. A distributed data graph storage system according to claim 11, wherein, if adding the target vertex to the graph partition causes the graph partition to exceed a predetermined maximum partition size, a new data portion is generated comprising data encoding the target vertex, and, for the or each of the one or more central vertices of the graph partition, data encoding the central vertex and data encoding the or each of the vertices on the shortest path from the target vertex to the central vertex.

13. A method for storing a data graph representing information as vertices interconnected by edges denoting relationships between the connected vertices, the data graph being composed of a plurality of graph partitions and being stored as a plurality of data portions distributed among a plurality of data storage servers, wherein each data portion encodes a version of one from among the plurality of graph partitions, wherein when two or more data portions each encode a version of the same graph partition from among the plurality of graph partitions, the two or more data portions are stored on different data storage servers from among the plurality of data storage servers; the method comprising:

    receiving access requests for the stored data graph;
    distributing the received access requests among the plurality of data storage servers;
    recording statistics representing the distribution among the data portions of data access events caused by the access requests; and
    increasing or decreasing the number of data portions encoding versions of one or more of the graph partitions in dependence upon the recorded statistics.

14. A suite of computer programs which, when executed by distributed computing devices including a plurality of data storage servers, cause the distributed computing devices to function as the data storage system according to any of claims 1 to 12, or to perform the method of claim 13.


**Amended claims in accordance with Rule 137(2) EPC.**

1. A distributed data graph storage system, configured to store a data graph representing information as a plurality of vertices interconnected by edges denoting relationships between the connected vertices, the data graph being composed of a plurality of graph partitions, each graph partition being a region of the data graph comprising interconnected vertices from among the plurality of vertices; the data graph storage system comprising:

    a plurality of data storage servers (200) each configured to store one or more data portions, wherein each data portion encodes a version of one from among the plurality of graph partitions;
    a data portion distribution controller (102) configured, when two or more data portions each encode a version of the same graph partition from among the plurality of graph partitions, to allocate the two or more data portions to different data storage servers from among the plurality of data storage servers (200);
a data access module (104) configured to receive access requests for the stored data graph and to distribute the received access requests among the plurality of data storage servers (200);
a graph partition usage monitor (106) configured to record statistics representing the distribution among the data portions of data access events caused by the access requests, the recorded statistics comprising a distribution of data access events across the data portions over a period of time and a distribution of data access events across the plurality of data storage servers (200) over the period of time; wherein
the data portion distribution controller (102) is configured to increase or decrease the number of data portions encoding versions of one from among the graph partitions in dependence upon the recorded statistics, the data portion distribution controller (102) being configured to select a partition from among the graph partitions for which to increase the number of data portions that encode versions of the selected partition by:

identifying a data portion for which the number of data access events at the identified data portion as a proportion of the number of data access events at the data storage server storing the identified data portion exceeds the size of the identified data portion as a proportion of the total size of data portions stored on the data storage server storing the identified data portion by more than a threshold amount; and
selecting the graph partition of which a version is encoded by the identified data portion as the graph partition for which to increase the number of data portions encoding versions thereof.

2. A distributed graph storage system according to claim 1, wherein
the recorded statistics comprise a distribution of data access events across the graph partitions; and
the data portion distribution controller (102) is configured to select a graph partition from among the graph partitions for which to increase the number of data portions that encode versions of the selected partition by:

identifying a graph partition for which the number of data access events at the identified graph partition per data portion encoding the identified graph partition exceeds the total number of data access events at the one or more data storage servers storing data portions encoding the identified graph partition moderated by the size of the data portions encoding the identified graph partition by more than a threshold amount.

3. A distributed data graph storage system according to claim 1, wherein the data portion distribution control module (102) is further configured to determine, for each of the plurality of graph partitions, the number of data portions encoding a version of the graph partition to store, in dependence upon one or a combination of more than one properties of the graph partition;
the one or more properties comprising at least either:

a first property measured by a first value proportional to a number of edges in the graph partition; and
a second property measured by a second value based on the average and maximum degree of the vertices in the graph partition compared to the average and maximum degree of the vertices in the data graph.

4. A distributed data graph storage system according to claim 3, wherein
the data portion distribution control module (102) is configured:

to identify each edge as being one of a predetermined set of edge types, each of the predetermined set of edge types having an associated coefficient; and
to calculate the first value by summing the product of, for each edge type, the number of edges in the graph partition identified as being of the edge type and the associated coefficient.

5. A distributed data graph storage system according to claim 1, further comprising:

a boundary replication module (108), configured, for each graph partition, to add to each data portion encoding a version of the graph partition:

a copy of data encoding each of a first group of vertices, the first group of vertices being each vertex neighbouring a boundary vertex of the graph partition and being from a graph partition other than the graph partition; and
a copy of data encoding each of a second group of vertices which is determined by the boundary replication module to have satisfied a criterion assessing binding between the member of the second group of vertices and the graph partition, the second group of vertices being each vertex neighbouring the first group of vertices and being from a graph partition other than the graph partition.

6. A distributed data graph storage system according to claim 5, wherein the boundary replication module (108) is configured to calculate, for each member of the second group of vertices:

   a first radius, being the radius of the union of the graph partition and the member of the second group of vertices; and
   a second radius, being the radius of the graph partition;
   and the member of the second group of vertices is determined to have satisfied the criterion assessing binding between the member of the second group of vertices and the graph partition if the first radius is smaller than the second radius.

7. A distributed data graph storage system according to claim 1, further comprising:

   a partition boundary update module (110), the partition boundary update module (110) comprising:

      a graph-based binding calculator (112) configured to calculate, a graph-based binding value representing graph-based binding between a target vertex and a graph partition; and
      a usage-based binding calculator (114) configured to calculate a usage-based binding value representing usage-based binding between a target vertex and a graph partition;
      the partition boundary update module (110) being configured to perform partition updates for each of the graph partitions, a partition update comprising, for each vertex neighbouring a boundary vertex of the graph partition and being from one of the plurality of graph partitions other than the graph partition as the target vertex, using the graph-based binding calculator (112) to calculate the graph-based binding value representing graph-based binding between the target vertex and the graph partition, and using the usage-based binding calculator (114) to calculate the usage-based binding value representing usage-based binding between the target vertex and the graph partition, calculating an overall binding value by combining the graph-based binding value and the usage-based binding value, and, if the overall binding value exceeds a predetermined threshold, adding the target vertex to the graph partition and removing the target vertex from its current graph partition.

8. A distributed data graph storage system according to claim 7, wherein the graph-based binding value is based on, for each central vertex in the graph partition, the length of the shortest path from the target vertex to the central vertex as a proportion of the length of the longest from among the shortest paths from the central vertex to each of the vertices at the edge of the graph partition.

9. A distributed data graph storage system according to claim 7, wherein the usage-based binding value is based on the proportion of the total number of graph traversal paths overlapping the graph partition over a selected time period that included the target vertex in the graph traversal path.

10. A distributed data graph storage system according to claim 9, wherein the calculated usage-based binding value is moderated by a time-decaying factor based on the time between the calculation and the end of the selected time period.

11. A distributed data graph storage system according to claim 10, wherein, if adding the target vertex to the graph partition causes the graph partition to exceed a predetermined maximum partition size, a new data portion is generated comprising data encoding the target vertex, and, for the or each of the one or more central vertices of the graph partition, data encoding the central vertex and data encoding the or each of the vertices on the shortest path from the target vertex to the central vertex.

12. A method for storing a data graph representing information as a plurality of vertices interconnected by edges denoting relationships between the connected vertices, the data graph being composed of a plurality of graph partitions and being stored as a plurality of data portions distributed among a plurality of data storage servers (200), each graph partition being a region of the data graph comprising interconnected vertices from among the plurality of vertices, wherein each data portion encodes a version of one from among the plurality of graph partitions, wherein when two or more data portions each encode a version of the same graph partition from among the plurality of graph partitions, the two or more data portions are stored on different data storage servers from among the plurality of data storage servers (200);
the method comprising:

receiving access requests for the stored data graph;
distributing the received access requests among the plurality of data storage servers (200);
recording statistics representing the distribution among the data portions of data access events caused by the access requests, the recorded statistics comprising a distribution of data access events across the data portions over a period of time and a distribution of data access events across the plurality of data storage servers (200) over the period of time; and
increasing or decreasing the number of data portions encoding versions of one or more of the graph partitions in dependence upon the recorded statistics, including selecting a partition from among the graph partitions for which to increase the number of data portions that encode versions of the selected partition by:

identifying a data portion for which the number of data access events at the identified data portion as a proportion of the number of data access events at the data storage server storing the identified data portion exceeds the size of the identified data portion as a proportion of the total size of data portions stored on the data storage server storing the identified data portion by more than a threshold amount; and
selecting the graph partition of which a version is encoded by the identified data portion as the graph partition for which to increase the number of data portions encoding versions thereof.

13. A suite of computer programs which, when executed by distributed computing devices including a plurality of data storage servers, cause the distributed computing devices to perform the method of claim 12.

access requests

100

boundary
replication
module        108

data access module

104

partition
boundary
update module
110

graph-based
binding
calculator  112

data portion
distribution
controller

102

graph partition
usage monitor 106

usage-based
binding
calculator  114

300

data storage
server   200

data storage
server   200

data storage
server   200

FIGURE 1

| API | 210 |
| Graph Layer | 220 |
| Storage Layer | 230 |
| Network Layer | 240 |

Partition set for server 1

Replica control information

| P1 | P2 | P3 | ... |

Storage server 200
Storage server 200
Storage server 200
Storage server 200
Storage server 200

300

FIGURE 2

Vertices intersection

Server 1

| P1 | P2 | P3 | |

Server 2

| | P4 | P2 | P7 |

Partition replica

FIGURE 3

Europäisches
Patentamt

European
Patent Office

Office européen
des brevets

# EUROPEAN SEARCH REPORT

Application Number

EP 14 17 0421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 731 020 A1 (FUJITSU LTD [JP]) 14 May 2014 (2014-05-14) * abstract * * figures 1,3 * * paragraphs [0001], [0009] - [0114], [0022], [2342], [0052], [0054], [0061] - [0065] * | 1-14 | INV. H04L29/08 G06F17/30 |
| Y | LI-YUNG HO ET AL: "Distributed Graph Database for Large-Scale Social Computing", CLOUD COMPUTING (CLOUD), 2012 IEEE 5TH INTERNATIONAL CONFERENCE ON, IEEE, 24 June 2012 (2012-06-24), pages 455-462, XP032215327, DOI: 10.1109/CLOUD.2012.33 ISBN: 978-1-4673-2892-0 * abstract * * figure 2 * * page 455, left-hand column, paragraph 1 - page 456, right-hand column, paragraph 3 * * page 457, left-hand column, paragraph 4 - page 458, left-hand column, paragraph 4 * | 1-14 | |
| A | US 2014/095457 A1 (QUAN JUSTIN [US]) 3 April 2014 (2014-04-03) * abstract * * figures 1,2 * * paragraphs [0002] - [0008], [0016] - [0023], [0029] - [0033], [0038] - [0045] * | 1-14 | TECHNICAL FIELDS SEARCHED (IPC) H04L G06F |

The present search report has been drawn up for all claims

| Place of search | Date of completion of the search | Examiner |
|---|---|---|
| Munich | 24 November 2014 | López Monclús, I |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 17 0421

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2014

| Patent document cited in search report | | Publication date | Patent family member(s) | | Publication date |
|---|---|---|---|---|---|
| EP 2731020 | A1 | 14-05-2014 | NONE | | |
| US 2014095457 | A1 | 03-04-2014 | US | 2014095457 A1 | 03-04-2014 |
| | | | US | 2014095591 A1 | 03-04-2014 |
| | | | US | 2014095617 A1 | 03-04-2014 |
| | | | US | 2014095624 A1 | 03-04-2014 |
| | | | US | 2014095646 A1 | 03-04-2014 |
| | | | US | 2014095660 A1 | 03-04-2014 |
| | | | US | 2014095667 A1 | 03-04-2014 |
| | | | US | 2014095705 A1 | 03-04-2014 |
| | | | US | 2014095734 A1 | 03-04-2014 |
| | | | US | 2014095881 A1 | 03-04-2014 |
| | | | US | 2014101103 A1 | 10-04-2014 |
| | | | US | 2014101237 A1 | 10-04-2014 |
| | | | US | 2014101451 A1 | 10-04-2014 |
| | | | US | 2014108335 A1 | 17-04-2014 |
| | | | US | 2014136662 A1 | 15-05-2014 |
| | | | US | 2014136830 A1 | 15-05-2014 |
| | | | US | 2014137102 A1 | 15-05-2014 |
| | | | US | 2014156793 A1 | 05-06-2014 |
| | | | US | 2014164453 A1 | 12-06-2014 |
| | | | US | 2014215025 A1 | 31-07-2014 |
| | | | WO | 2014055446 A1 | 10-04-2014 |
| | | | WO | 2014055448 A1 | 10-04-2014 |
| | | | WO | 2014055450 A1 | 10-04-2014 |
| | | | WO | 2014055601 A1 | 10-04-2014 |
| | | | WO | 2014055607 A1 | 10-04-2014 |
| | | | WO | 2014055613 A1 | 10-04-2014 |

EPO FORM P0459